# EUROPÄISCHE PATENTANMELDUNG

(11) **EP 1 317 102 A1**
(43) Veröffentlichungstag der Anmeldung: **04.06.2003**
(21) Anmeldenummer: 01440406.5
(22) Anmeldetag: 30.11.2001
(51) Int. Cl.: H04L 12/56, H04Q 11/04, H04L 12/54

(54) **QoS controller für ein bidirektionales Punkt-zu-Mehrpunkt Netzwerk**

(71) Anmelder: ALCATEL, 75008 Paris (FR)
(72) Erfinder: Wahl, Stefan, 71701 Schwieberdingen (DE)
(74) Vertreter: Menzietti, Domenico, Dipl.-Ing

(57) **Zusammenfassung**

Aufgabe der Erfindung ist es, in bidirektionalen Punkt-zu-Mehrpunkt Zugangsnetzen, wie z.B. LMDS, eine vereinfachte QoS Garantie zu gewährleisten. Gelöst wird diese Aufgabe durch einen QoS Controller (1) beinhaltend mindestens ein Software Modul, das geeignet ist, zumindest einen QoS Verarbeitungsschritt sowohl für den uplink als auch für den downlink durchzuführen. Beim erfindungsgemäßen QoS Controller (1) wird zumindest für einen Großteil der Verbindung sowohl im uplink als auch im downlink derselbe QoS Controller (1) und dasselbe Software Modul verwendet. Dies hat u.a. den Vorteil, dass ein nahezu symmetrisches Verhalten für uplink und downlink erzielt wird.

## Beschreibung

Die Erfindung betrifft einen QoS Controller.

In bidirektionalen leitungsgebundenen oder drahtlosen Punkt-zu-Mehrpunkt Zugangsnetzen, wie z.B. LMDS, HFR oder HFC, soll für Telekommunikationsverbindungen in beiden Übertragungsrichtungen der sogenannte Quality of Service (QoS) garantiert werden; LMDS = Local Multipoint Distribution System, HFR = Hybrid Fibre Radio, HFC = Hybrid Fibre Coax. LMDS ist beispielsweise als lokales Netz aufgebaut mit einer Funk-Basisstation und mehreren Funk-Endstellen, die miteinander über Funk kommunizieren. Die verwendeten Übertragungskanäle liegen z.B. im Bereich 20 bis 40 GHz.

Die Verbindungen im sogenannten downlink, d.h. von einer Zentrale, z.B. einer Basisstation, zu mehreren Endstellen unterscheiden sich von den Verbindungen im sogenannten uplink von den Endstellen zur Zentrale durch z.B. Zugriffsprotokoll, Datenrate, etc. Für den downlink wird z.B. TDM verwendet, für den uplink z.B. TDMA, CDMA, FDMA oder Kombinationen davon; TDM = Time Division Multiplex, TDMA = Time Division Multiple Access, CDMA = Code Division Multiple Access, FDMA = Frequency Division Multiple Access. Im uplink wird z.B. ein MAC Protokoll verwendet; MAC = Medium Access Control. Mittels des MAC Protokolls wird u.a. die Zuweisung von Ressourcen geregelt, z.B. Sendeberechtigung, Bandbreite oder Datenrate für Endstellen, die gleichzeitig Zugriff auf dasselbe Medium haben.

Um QoS für ein z.B. übers Internet empfangenes Informationspaket über Funk im downlink zur Verfügung zu stellen, ist in der Basisstation ein QoS Controller mit spezieller Software bereitgestellt. Für die Bereitstellung von QoS im uplink von den Endstellen zur Basisstation und zur Weiterleitung übers Internet ist in der Basisstation ein weiterer QoS Controller mit anderer spezieller Software vorgesehen. Für uplink und downlink stehen somit zwei unterschiedliche Hardware QoS Controller mit jeweils unterschiedlicher Software zur Verfügung.

Aufgabe der Erfindung ist es, eine vereinfachte QoS Garantie zu gewährleisten.

Gelöst wird diese Aufgabe durch einen QoS Controller nach Anspruch 1.

Beim erfindungsgemäßen QoS Controller wird zumindest für einen Großteil der Verbindung sowohl im uplink als auch im downlink derselbe QoS Controller und dasselbe Software Modul verwendet.

Dies hat den Vorteil, dass ein nahezu symmetrisches Verhalten für uplink und downlink erzielt wird. Dies führt zu weniger Störungen in den Übertragungskanälen.

Ferner sind die Aufwendungen für das Design und die Entwicklung der QoS Garantie reduziert. Der QoS kann schneller entwickelt werden, wodurch Kosten eingespart werden.

Zudem wird weniger Raum für die Implementierung benötigt. Der QoS Controller hat gleiche Verbindungs-Datensätze, geringere Abmessungen und kann kostengünstiger hergestellt werden.

Auf Grund nur eines QoS Controllers ist die Mehrfachausnutzung der Verbindungsparameter möglich und die Initialisierung vereinfacht. Es wird z.B. nur ein Boot Vorgang benötigt.

Vorteilhafte Ausgestaltungen sind den abhängigen Ansprüchen und der nachfolgenden Beschreibung zu entnehmen.

Im folgenden wird die Erfindung anhand eines Ausführungsbeispiels und unter Zuhilfenahme einer Figur erläutert.

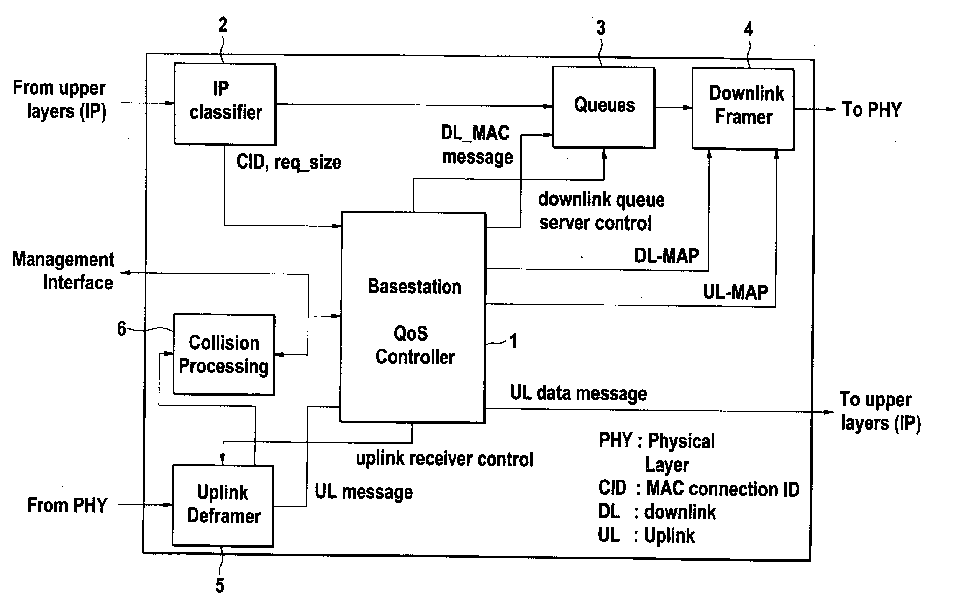

Die Figur zeigt einen schematisch dargestellten Ausschnitt aus einer erfindungsgemäßen Basisstation eines LMDS-Netzes.

Die Basisstation beinhaltet einen QoS Controller 1, eine Reihenschaltung aus einem IP Klassifizierer 2, einem Zwischenspeicher 3 und einem downlink Framer 4, die jeweils mit dem QoS Controller 1 verbunden sind, sowie einen uplink Deframer 5, der mit dem QoS Controller 1 verbunden ist. Ferner ist eine Einheit 6 zur Erkennung von Kollisionen vorgesehen, die mit dem QoS Controller 1 verbunden ist und eine Schnittstelle zu einem Management aufweist.

Der IP Klassifizierer 2 hat einen Eingang und zwei Ausgänge. Am Eingang werden IP Informationspakete aus dem Internet empfangen, IP = Internet Protocol. In Informationspaketen können als Information Sprache, Daten, Video, Internet Web-Seiten, etc. übertragen werden. Der eine Ausgang ist mit dem Zwischenspeicher 3 verbunden, der andere Ausgang mit dem QoS Controller 1. Der IP Klassifizierer 2 ist vorgesehen, um zusammen mit den Informationspaketen übertragene und diesen zugeordnete Zeiger aus dem empfangenen Paketstrom zu extrahieren, zu evaluieren und dem Zwischenspeicher 3 zuzuführen. In den Zeigern enthaltene sogenannte MAC connection IDs, d.h. Verbindungsadressen, werden zum QoS Controller übertragen.

Der Zwischenspeicher 3 hat zwei Dateneingänge, einen Steuereingang und einen Ausgang und wird auch als Queue bezeichnet. Der eine Dateneingang ist mit dem IP Klassifizierer 2 verbunden. Der andere Dateneingang und der Steuereingang sind mit dem QoS Controller 1 verbunden. Der Ausgang ist mit dem downlink Framer 4 verbunden. Der Zwischenspeicher 3 kann aus einem oder mehreren Speichern bestehen und einen oder mehrere Speicherbereiche aufweisen. Jeder Speicher bzw. jeder Speicherbereich ist z.B. einer Quality of Service Klasse zugeordnet. Über den einen Dateneingang werden die vom IP Klassifizierer 2 extrahierten Zeiger eingelesen. Die Informationspakete können in einem separaten Paketspeicher oder ebenfalls im Zwischenspeicher 3 gespeichert werden. Sie werden gegebenenfalls ebenfalls über den einen Dateneingang eingelesen. Über den anderen Dateneingang werden dem Zwischenspeicher 3 sogenannte MAC messages, d.h. für den downlink bestimmte und im QoS Controller 1 generierte MAC Meldungen zugeführt. Gesteuert über den QoS Controller 1 und den Steuereingang werden die relevanten Informationen am Ausgang des Zwischenspeichers 3 zur Verfügung gestellt.

Der downlink Framer 4 hat einen Dateneingang, zwei Steuereingänge und einen Ausgang. Der Dateneingang ist mit dem Zwischenspeicher 3 verbunden. Über die Steuereingänge, die mit dem QoS Controller 1 verbunden sind, werden dem downlink Framer 4 zum Teil aus uplink Informationen im QoS Controller 1 generierte Informationen über das sogenannte MAP = Medium Access Protocol zugeführt. Der Ausgang ist über Funk mit den Endstellen verbunden. Der downlink Framer 4 dient dazu, den downlink frame, also den zu den Endstellen zu übertragenden Rahmen zusammenzustellen. Ein downlink frame beinhaltet z.B. ein Preamble Feld, ein Physical Layer Feld, ein MAC Feld und ein Datenfeld. Das Preamble Feld dient z.B. Synchronisationszwecken. Im MAC Feld werden z.B. Sendeberechtigungen, sogenannte grant messages übertagen. Im Datenfeld können unterschiedlich modulierte Datenpakete übertragen werden, so z.B. QPSK-, 16QAM- und/oder 64QAM modulierte Daten. Der downlink frame wird zu allen Endstellen übertragen. Jede Endstelle kann Datenpakete mindestens einer Modulationsart empfangen, z.B. QPSK, 16QAM und/oder 64QAM.

Der uplink Deframer 5 hat einen Dateneingang, einen Steuereingang und zwei Ausgänge. Der Dateneingang ist über Funk mit den Endstellen verbunden. Der Steuereingang ist mit dem QoS Controller 1 verbudnen und dient der Zuführung von Informationen über die Empfangskontrolle im uplink. Der eine Ausgang ist mit der Einheit 6 verbunden, der andere Ausgang mit dem QoS Controller 1. Dem QoS Controller 1 werden die sogenannten uplink messages, d.h. die im uplink empfangenen Meldungen zugeführt. Der uplink Deframer 5 dient u.a. dazu, empfangene Datenpakete zu selektieren.

Die Einheit 6 dient der Erkennung von Kollisionen. Im Falle des Erkennens von Kollisionen werden diese sowohl dem QoS Controller als auch dem Management mitgeteilt, um geeignete Maßnahmen einzuleiten.

Der QoS Controller 1 ist beispielsweise als Prozessor mit spezieller Software ausgeführt. Der Prozessor ist z.B. ein Mikroprozessor oder ein Digitaler Signalprozessor. Die Software ist z.B. in der Programmiersprache C oder C++ programmiert. Zusätzlich können z.B. vorgesehen sein: ein RAM, ein ROM, ein Register, ein Flash; letztere Elemente auch in beliebiger Kombination und in mehrfacher Anzahl.

Der QoS Controller 1 beinhaltet mindestens ein Software Modul, das geeignet ist, zumindest einen QoS Verarbeitungsschritt sowohl für den uplink als auch für den downlink durchzuführen.

Der QoS Controller 1 wendet mittels des Software Moduls zumindest im wesentlichen denselben Algorithmus an für Zuweisungen von Ressourcen und QoS Management sowohl in uplink als auch in downlink. Die für die Zuweisung der Ressourcen, z.B. Bandbreite, nötigen Informationen werden sowohl für uplink als auch für downlink z.B. zu 80 bis 100% unter Verwendung desselben Algorithmus gewonnen. Ebenso werden die für das QoS Management nötigen Informationen sowohl für uplink als auch für downlink z.B. zu 80 bis 100% unter Verwendung desselben Algorithmus gewonnen.

Der QoS Controller 1 weist dieselbe Implementierung zumindest der wesentlichen Funktionen eines MAC QoS Controllers für Zuweisungen von Ressourcen und QoS Management sowohl in uplink als auch in downlink auf. Die wesentlichen Funktionen decken z.B. 80 bis 100% ab. Der MAC QoS Controller empfängt über den uplink von den Endstellen Anfragen zum Senden von Daten, zum Aufbau einer Verbindung, etc. und ermittelt mittels des MAC Algorithmus Sendeberechtigungen, etc., die über den downlink zu den Endstellen übertragen werden. Der MAC QoS Controller steuert ferner mittels desselben MAC Algorithmus das Auslesen des Zwischenspeichers 3. Der Zwischenspeicher 3 beinhaltet in diesem Fall mehrere Queues, die zur Zwischenspeicherung unterschiedlich modulierter Datenpakete geordnet nach zugehörigen Quality of Service Klassen dienen. In jeder Queue werden z.B. Datenpakete einer bestimmten QoS Klasse zwischengespeichert. Innerhalb einer Queue können unterschiedlich modulierte Datenpakete zwischengespeichert werden. Datenpakete mit einer höheren QoS Klasse, d.h. einer höheren Priorität, werden bevorzugt ausgelesen.

Der QoS Controller 1 dient u.a. dazu, für den uplink Sendeberechtigungen zuzuteilen und für den downlink Bandbreite oder Datenrate zuzuteilen, wobei die Zuteilungen erfolgen in Abhängigkeit von Füllständen mindestens eines Zwischenspeichers 3, in dem eine Zwischenspeicherung von zu übertragenden Informationspaketen und/oder zugehörigen Zeigern und/oder MAC messages erfolgt, und/oder von Verbindungsparametern und/oder von zur Verfügung stehenden Übertragungskanalkapazität und/oder von QoS Klassen. Der QoS Controller 1 führt z.B. das Mappen der zu übertragenden Datenpakete unter Zuhilfenahme des MAC Algorithmus und unter Berücksichtigung der Füllstände einzelner Queues durch, wobei diejenigen Queues bevorzugt ausgelesen werden, die einer höheren QoS Klasse zugeordnet sind. Ferner werden beispielsweise die Füllstände der Queues der Endstellen zum QoS Controller 1 übertragen, der beim Mappen der zu übertragenden Datenpakete auch diese Füllstände berücksichtigt. Einer Endstelle, deren Queues bereits gut gefüllt sind, werden z.B. für einen bestimmten Zeitraum keine oder nur wenig Datenpakete übermittelt.

Der QoS Controller 1 dient ferner u.a. dazu, für den uplink Sendeberechtigungen zuzuteilen und für den downlink Bandbreiten oder Datenraten oder Sendeberechtigungen für zu übertragende Datenpakete zuzuteilen, wobei die Zuteilungen sowohl für uplink als auch für downlink mittels des MAC Algorithmus ermittelt werden, für den downlink zusätzlich unter Berücksichtigung der durch die QoS Klasse vorgegebenen Priorität.

Der QoS Controller 1 hat einen Ausgang, der mit dem Internet verbunden ist zwecks Übertragung der uplink Informationspakete.

Im Ausführungsbeispiel ist die Erfindung auf ein LMDS Netz angewendet. Anstelle eines LMDS Netzes kann jedes beliebige andere bidirektionale leitungsgebundene oder drahtlose Punkt-zu-Mehrpunkt Zugangsnetz verwendet werden.

Im Ausführungsbeispiel ist im uplink das MAC Protokoll verwendet. Die Erfindung kann anstelle bei einem MAC Protokoll auch bei jedem anderen beliebigen Protokoll im uplink angewendet werden.

Beim Ausführungsbeispiel ist der QoS Controller in einer Basisstation verwendet. Anstelle in einer Basisstation kann der QoS Controller auch an jeder beliebigen Stelle im Netz, z.B. in einem Netzknoten, einem sogenannten Hub, einem sogenannten Head End oder in einer Endstelle eingesetzt werden.

Im Ausführungsbeispiel ist ein QoS Controller mit einem speziellen Software Modul angegeben. Synonyme für das Software Modul sind Softwarebaustein, Softwarepaket, Software, Softwareprogramm, Computerprogramm, Programmabschnitt. Anstelle eines Software Moduls können ein oder mehr Kopien des Software Moduls im QoS Controller vorhanden sein. Dadurch wird eine parallele Verarbeitung ermöglicht wodurch sich die Verarbeitungsgeschwindigkeit erhöht und ein gleichzeitiger, gemeinsamer Zugriff auf dasselbe Software Modul durch uplink und downlink Verarbeitungsschritte wird unterbunden. Anstelle in einem QoS Controller können ein oder mehr Kopien auch auf ein oder mehr Prozessoren oder QoS Controllern verteilt sein. Dadurch wird ebenfalls eine parallele Verarbeitung ermöglicht wodurch sich die Verarbeitungsgeschwindigkeit erhöht und ein gleichzeitiger, gemeinsamer Zugriff auf dasselbe Software Modul durch uplink und downlink Verarbeitungsschritte wird unterbunden. Anstelle auf einen Controller kann das Software Modul auch auf zwei oder mehr Prozessoren oder zwei oder mehr QoS Controllern verteilt sein. Jeder Prozessor bzw. QoS Controller hat dann Zugriff auf nur einen Teil des Software Moduls. Auch dadurch erhöht sich die Verarbeitungsgeschwindigkeit.

## Patentansprüche

1. QoS Controller (1) für ein bidirektionales Punkt-zu-Mehrpunkt Zugangsnetz, insbesondere ein LMDS-Netz, beinhaltend mindestens ein Software Modul, das geeignet ist, zumindest einen QoS Verarbeitungsschritt sowohl für den uplink als auch für den downlink durchzuführen.

2. QoS Controller (1) nach Anspruch 1, **dadurch gekennzeichnet, dass** das Software Modul zumindest im wesentlichen denselben Algorithmus anwendet für Zuweisungen von Ressourcen und QoS Management sowohl in uplink als auch in downlink.

3. QoS Controller (1) nach Anspruch 1, **dadurch gekennzeichnet, dass** er dieselbe Implementierung zumindest der wesentlichen Funktionen eines MAC QoS Controllers für Zuweisungen von Ressourcen und/oder QoS Management sowohl in uplink als auch in downlink aufweist.

4. QoS Controller (1) nach Anspruch 1, **dadurch gekennzeichnet, dass** er geeignet ist, für den uplink Sendeberechtigungen zuzuteilen und für den downlink Bandbreite oder Datenrate zuzuteilen, wobei die Zuteilungen erfolgen in Abhängigkeit von Füllständen mindestens eines Zwischenspeichers (3), in dem eine Zwischenspeicherung von zu übertragenden Informationspaketen und/oder zugehörigen Zeigern und/oder MAC messages erfolgt, und/oder von Verbindungsparametern und/oder von zur Verfügung stehenden Übertragungskanalkapazität und/oder von QoS Klassen.

5. QoS Controller (1) nach Anspruch 1, **dadurch gekennzeichnet, dass** er geeignet ist, für den uplink Sendeberechtigungen zuzuteilen und für den downlink Bandbreiten oder Datenraten oder Sendeberechtigungen für zu übertragende Informations- oder Datenpakete zuzuteilen, wobei die Zuteilungen sowohl für uplink als auch für downlink mittels eines MAC Algorithmus ermittelt werden, für den downlink zusätzlich unter Berücksichtigung der durch die QoS Klasse vorgegebenen Priorität.

6. Basisstation für ein LMDS Netz beinhaltend einen QoS Controller (1) nach Anspruch 1 und eine Reihenschaltung aus einem IP Klassifizierer (2), einem Zwischenspeicher (3) und einem downlink Framer (4), die jeweils mit dem QoS Controller (1) verbunden sind, sowie einen uplink Deframer (5), der mit dem QoS Controller (1) verbunden ist.

7. QoS Software Modul für ein bidirektionales Punkt-zu-Mehrpunkt Zugangsnetz, insbesondere ein LMDS-Netz, das geeignet ist, zumindest einen QoS Verarbeitungsschritt sowohl für den uplink als auch für den downlink durchzuführen.
